# EUROPÄISCHE PATENTANMELDUNG

(11) **EP 0 875 337 A1**
(43) Veröffentlichungstag der Anmeldung: **04.11.1998**
(21) Anmeldenummer: 98107533.6
(22) Anmeldetag: 24.04.1998
(51) Int. Cl.: B23Q 11/00, B23Q 11/08, F16P 3/02

(54) **Teleskopabdeckung mit Bremseinrichtung**

(30) Priorität: 28.04.1997 DE 19717867
(71) Anmelder: Kabelschlepp Gesellschaft mit beschränkter Haftung, 57074 Siegen (DE)
(72) Erfinder: Strack, Hermann, 57250 Netphen (DE)
(74) Vertreter: Kahlhöfer, Hermann, Dipl.-Phys.

(57) **Zusammenfassung**

Gegenstand der Erfindung ist eine Abdeckung für ein Maschinenbett, insbesondere einer Werkzeugmaschine, die teleskopartig ineinanderschiebbare Abdeckkästen (2, 3, 4) aufweist. Zwei benachbarte Abdeckkästen (2, 3; 3, 4) weisen wenigstens eine gemeinsame Bremseinrichtung (10) auf. Die Bremseinrichtung (10) umfaßt wenigstens einen an dem einen Abdeckkasten (2, 3) angeordneten Bremskörper (13, 23) und wenigstens eine an dem anderen Abdeckkasten (3, 4) angeordnete Bremsbacke (11, 12) auf. Die Bremsbacken (11, 12) üben eine im wesentlichen quer zur Bewegungsrichtung des Bremskörpers (13, 23) gerichtete Bremskraft auf den Bremskörper (13, 23) aus, wodurch die Relativgeschwindigkeit zwischen den benachbarten Abdeckkästen (2, 3; 3, 4) verringert, vorzugsweise aufgehoben, wird.

## Beschreibung

Die Erfindung bezieht sich auf eine Abdeckung für ein Maschinenbett, insbesondere einer Werkzeugmaschine, mit teleskopartig ineinanderschiebbaren Abdeckkästen.

Durch die WO 96/27478 ist eine Abdeckung für ein Maschinenbett einer Werkzeugmaschine bekannt, die aus teleskopartig ineinanderschiebbaren Abdeckkästen besteht. Jeder Abdeckkasten weist eine erste und eine zweite Seitenwand sowie eine mit den Seitenwänden verbundene Oberwand auf. Desweiteren weist jeder Abdeckkasten eine Rückwand auf. Während des Betriebes solcher teleskopartig ausgebildeten Abdeckungen kann es zu einer hohen Schallemission kommen, da während des Auseinanderziehens der Abdeckung bzw. während des Zusammenschiebens der Abdeckung einzelne Abdeckkästen bzw. deren Mitnehmer und Gegenmitnehmer gegeneinander stoßen. Nach der WO 96/27478 wird vorgeschlagen, daß der Mitnehmer ein Dämpfungselement aufweist, welches auf der Mitnehmerfläche angeordnet ist. Durch das Dämpfungselement wird der beim Verschieben entstehende Stoß zwischen Mitnehmer und dem Gegenmitnehmer zweier Kästen abgedämpft, wobei gleichzeitig eine Verringerung der Schallemission erreicht wird. Dies ist insbesondere von Bedeutung, da solche Abdeckungen wie Resonanzköper wirken.

Eine weitere Ausgestaltung einer teleskopartigen Abdeckung ist durch die DE 42 14 118 A1 bekannt. Die DE 42 14 118 schlägt ein Dämpfungselement vor, welches auch eine Abstreiferfunktion erfüllt. Das Dämpfungselement besteht aus elastisch zusammendrückbarem Material. Desweiteren kann zumindest ein Teil des Dämpfungselementes aus einer als Blattfeder ausgebildeten Materialzone bestehen,

Abdeckungen für Maschinenbetten können relativ große Abmessungen aufweisen, die bis zu einigen Metern betragen können, haben. Dadurch, daß die Abdeckungen aus Metall bestehen, entstehen während des Zusammenstoßes relativ hohe Kräfte, die das Dämpfungselement stark beanspruchen. Für eine befriedigende Dämpfung der Stöße und damit auch zur Verringerung der Schallemission ist daher eine ausreichend große Dimensionierung der Dämpfungselemente notwendig. Eine solche Dimensionierung kann nicht immer realisiert werden, da der zur Verfügung gestellte Einbauraum oft zu Klein ist. Unter diesen Bedingungen wird stets versucht, eine optimale Dämpfung bei Erfüllung der weiteren konstruktiven Randbedingungen zu Erfüllen. Hierbei wird eine gewisse Schallemission in Kauf genommen.

Hiervon ausgehend liegt der vorliegenden Erfindung die Aufgabe zugrunde, die bekannte Abdeckung für ein Maschinenbett so weiter zu bilden, daß eine weitere Reduktion der Schallemission, die während des Betriebes der Abdeckung entsteht, ermöglicht wird. Ein weiteres Ziel der Erfindung ist es, eine relativ kompakte Ausbildung der Abdeckung zu erreichen.

Diese Aufgabe wird erfindungsgemäß durch eine Abdeckung für ein Maschinenbett mit den Merkmalen des Anspruchs 1 gelöst. Vorteilhafte Weiterbildungen sind Gegenstand der Unteransprüche.

In Abkehr von den aus dem Stand der Technik bekannten Lösungen zur Dämpfung von Abdeckkästen, bei denen die Dämpfung einzelner Abdeckkästen in Richtung der Bewegung der Abdeckkästen erfolgt, wird bei der erfindungsgemäßen Abdeckung eine Stoßdämpfung der Abdeckkästen quer zu der Bewegungsrichtung der Abdeckkästen vorgeschlagen. Hierzu weisen zwei benachbarte Abdeckkästen wenigstens eine gemeinsame Bremseinrichtung auf, durch die die Relativgeschwindigkeit zwischen den benachbarten Abdeckkästen verringert, vorzugsweise aufgehoben, wird. Die Bremseinrichtung weist wenigstens einen Bremskörper auf, der an einem der zwei benachbarten Abdeckkästen angeordnet ist. An dem anderen Abdeckkasten ist wenigstens eine Bremsbacke vorgesehen. Der Bremskörper ist in Eingriff mit der wenigstens einen Bremsbacke bringbar, wobei die Bremsbacke während des Eingriffs eine im wesentlichen quer zur Bewegungsrichtung des Bremskörpers gerichtete Bremskraft auf den Bremskörper ausübt. Durch diese Ausgestaltung der erfindungsgemäßen Abdeckung wird eine verbesserte Dämpfung der Stöße benachbarter Abdeckkästen erreicht, da die Relativgeschwindigkeit zwischen den benachbarten Abdeckkästen verringert, vorzugsweise aufgehoben, wird. Dadurch, daß wenigstens eine Bremsbacke eine im wesentlichen quer zur Bewegungsrichtung des Bremskörpers gerichtete Bremskraft auf den Bremskörper ausübt, ist auch ein relativ kompakter Aufbau der Bremseinrichtung möglich. Bevorzugt ist eine Ausgestaltung der Abdeckung, bei der zwei Bremsbacken vorgesehen sind, zwischen die der Bremskörper einbringbar ist. Wenigstens eine der Bremsbacken ist vorzugsweise im wesentlichen quer zur Bewegungsrichtung des Bremskörpers gegen eine Kraft verschieblich. Die Kraft ist vorzugsweise einstellbar. Dadurch, daß wenigstens eine der Bremsbacken im wesentlichen quer zur Bewegungsrichtung des Bremskörpers gegen eine Kraft verschieblich ist, gleitet der Bremskörper an der Bremsbacke bzw. den Bremsbacken entlang und wird während dieses Gleitvorgangs abgebremst. Die sich im Eingriff befindenden Flächen der Bremsbacken und der Bremskörper sind vorzugsweise so gestaltet, daß eine Selbsthemmung zwischen Bremsbacke und Bremskörper nicht eintritt, wenn der Bremskörper im wesentlich keilförmig ausgebildet ist. Der Neigungswinkel der Flächen des keilförmigen Bremskörpers ist entsprechend ausgestaltet.

Vorzugsweise sind die Bremsbacken gegen die Kraft wenigstens einer Feder verschieblich. Die Feder kann eine Zugfeder sein. Bevorzugt ist die Verwendung einer Druckfeder, da im Falle eines Federbruchs eine Funktionsfähigkeit der Bremseinrichtung wenigstens teilweise aufrechterhalten bleibt.

Statt einer Feder können die Bremsbacken gegen die Kraft wenigstens eines hydraulisch oder pneumatisch wirkenden Dämpfers verschieblich sein.

Nach einem weiteren vorteilhaften Gedanken wird vorgeschlagen, daß die Bremsbacken wenigstens teilweise aus einem stoßdämpfenden Material bestehen.

Bei einer verschieblichen Ausgestaltung der Bremsbacken wird vorzugsweise für jede Bremsbacke eine Führung vorgesehen. Die Führung ist vorteilhafterweise in einem Gehäuse ausgebildet, in dem insbesondere die Druckfedern angeordnet sind. Das Gehäuse, die Bremsbacken und gegebenenfalls die Druckfedern bzw. die hydraulisch oder pneumatisch wirkenden Dämpfer bilden eine Baueinheit, die an der Rückwand des Abdeckkasten angeordnet ist. Das Gehäuse kann mit der Rückwand verschraubt sein.

Nach einem weiteren vorteilhaften Gedanken wird eine Abdeckung vorgeschlagen, wobei jeder Abdeckkasten eine erste und eine zweite und eine mit den Seitenwänden verbundene Oberwand sowie eine Rückwand aufweist. Die Abdeckung zeichnet dadurch aus, daß jede Bremsbacke an einem verschwenkbar an der Rückwand angeordneten Tragarm ausgebildet ist und der Bremskörper an einer Unterseite der Oberwand des nächst größeren Abdeckkastens angeordnet ist.

Zur Verringerung der Bauteile der Bremseinrichtung wird vorgeschlagen, daß die Tragarme wenigstens eine gemeinsame Feder aufweisen. Statt einer gemeinsamen Feder können die Tragarme wenigstens einen gemeinsamen hydraulisch oder pneumatisch wirkenden Dämpfer aufweisen. Vorzugsweise ist der Dämpfer als ein doppelseitig wirkender Dämpfer ausgebildet.

Die Abdeckkästen einer Abdeckung stoßen einander, wenn die Abdeckung vollständig zusammengeschoben oder die Abdeckung auseinandergezogen wird. Um sicherzustellen, daß die Schallemission der Abdeckung aufgrund von Stößen benachbarter Abdeckkästen sowohl beim Auseinanderziehen der Abdeckung als auch beim Zusammenschieben der Abdeckung verringert wird, wird vorgeschlagen, daß an der Unterseite der Oberwand zwei Bremskörper vorgesehen sind. Der eine Bremskörper ist im Bereich der Rückwand angeordnet. Der andere Bremskörper ist in dem der Rückwand gegenüberliegenden Bereich angeordnet. Die Bremseinrichtung des nächst kleineren Abdeckkasten ist sowohl mit dem einen als auch mit dem anderen Bremskörper in Eingriff bringbar. Wird der kleinere Abdeckkasten in den größeren benachbarten Abdeckkasten hineingeschoben, so wird der kleinere Abdeckkasten durch den im Bereich der Rückwand angeordneten Bremskörper im Zusammenspiel mit den Bremsbacken abgebremst. Beim Auseinanderziehen der Abdeckkästen werden die Bremsbacken mit dem anderen Bremskörper, der in dem der Rückwand gegenüberliegenden Bereich angeordnet ist, in Eingriff gebracht und so ein Mitnehmen des nächst größeren Abdeckkastens durch den Kleineren Abdeckkasten bewirkt, ohne daß es hierbei auch zu Stößen kommt. Sowohl beim Zusammenschieben der Abdeckkästen als auch beim Auseinanderziehen von Abdeckkästen wird durch die Bremseinrichtung die Relativgeschwindigkeit zwischen den benachbarten Abdeckkästen verringert, vorzugsweise aufgehoben.

Zusätzlich zu der erfindungsgemäßen Ausgestaltung der Abdeckung kann diese mit konventionellen Dämpfungselementen versehen werden, wie dies nach dem Stand der Technik bekannt ist.

Vorzugsweise ist der Bremskörper keilförmig ausgebildet, wodurch während des Bremsvorgangs eine Zunahme der Bremskraft erreicht wird.

Weitere Vorteile und Einzelheiten der erfindungsgemäßen Abdeckung werden anhand der in der Zeichnung dargestellten Ausführungsbeispiele erläutert. Es zeigen:
- Fig. 1: schematisch eine Abdeckung in einer Vorderansicht,
- Fig. 2: die Abdeckung nach Fig. 1 in einer Draufsicht,
- Fig. 3: eine Draufsicht eines ersten Ausführungsbeispiels einer Abdeckung,
- Fig. 4: eine Rückansicht eines zweiten Ausführungsbeispiels einer Abdeckung und
- fig. 5: eine Rückansicht eines dritten Ausführungsbeispiels einer Abdeckung.

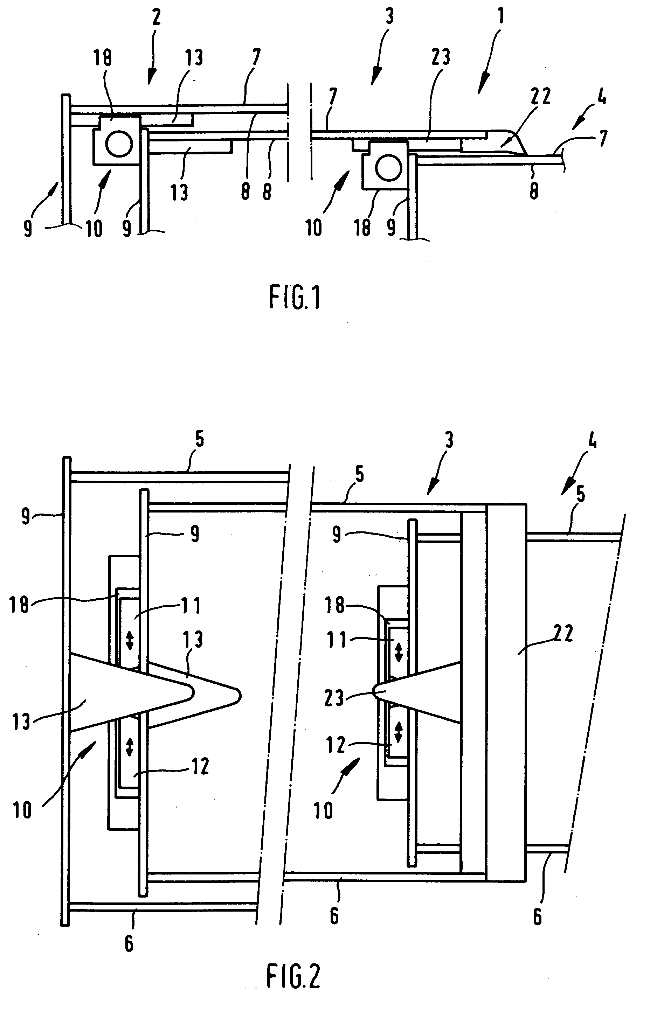

Fig. 1 zeigt schematisch eine Abdeckung 1 für ein Maschinenbett einer Werkzeugmaschine. Die Abdeckung 1 weist teleskopartig ineinander schiebbare Abdeckkästen 2, 3 und 4 auf. Zur Verringerung der Schallemission bedingt durch Zusammenstoßen zweier benachbarter Abdeckkästen 2, 3; 3, 4 weist die Abdeckung Bremseinrichtungen 10 auf. Jede Bremseinrichtung umläßt einen Bremskörper 13, 23 sowie Bremsbacken, die eine im wesentlichen quer zur Bewegungsrichtung der Bremskörper 13, 23 gerichtete Bremskraft auf den Bremskörper 13, 23 ausübt, wodurch die Relativgeschwindigkeit zwischen den benachbarten Abdeckkästen 2, 3; 3, 4 verringert, vorzugsweise aufgehoben, wird.

Jeder Abdeckkasten weist eine erste und eine zweite Seitenwand 5, 6 auf, wie dies insbesondere aus der Fig. 2 ersichtlich ist. Mit den Seitenwänden 5, 6 ist eine Oberwand 7 sowie eine Rückwand 9 verbunden. In den dargestellten Ausführungsbeispielen sind die Bremskörper 13, 23 jeweils an einer Unterseite 8 einer Oberwand 7 angeordnet. Dies stellt eine bevorzugte Anordnung der Bremskörper 13, 23 dar. Alternativ kann der Bremskörper 13, 23 auch an den anderen Wänden eines Kastens angeordnet werden. Entsprechend sind die Bremsbacken ebenfalls umzusetzen.

An der Unterseite 8 einer Oberwand 7 sind jeweils zwei Bremskörper 13, 23 angeordnet. Der Bremskörper 13 ist in der Nähe der Rückwand 9 des betreffenden Abdeckkastens 2, 3 angeordnet. Der zweite Bremskörper 23 ist an dem der Rückwand gegenüberliegenden Bereich angeordnet. Wie aus der Fig. 1 ersichtlich ist, ist der zweite Bremskörper 23 in der Nähe eines Abstreifers 22 angeordnet, der in bekannter Weise auf der Oberwand 7 eines nächst Kleineren Abdeckkastens 4 gleitet.

Die Abdeckkästen 3, 4 weisen Bremsbacken 11, 12 auf, die im wesentlichen quer zur Bewegungsrichtung der Bremskörper 13, 23 hin und her verschieblich sind. Die Bewegungsrichtung der Bremskörper 13, 23 entspricht der Bewegungsrichtung der einzelnen Abdeckkästen der Abdeckung. Die Bremsbacken 11, 12 sind so angeordnet, daß der jeweilige Bremskörper 13, 23 zwischen die Bremsbacken 11, 12 einführbar ist, so daß die Bremsbacken 11, 12 zur Anlage an den Bremskörper 13, 23 gelangen.

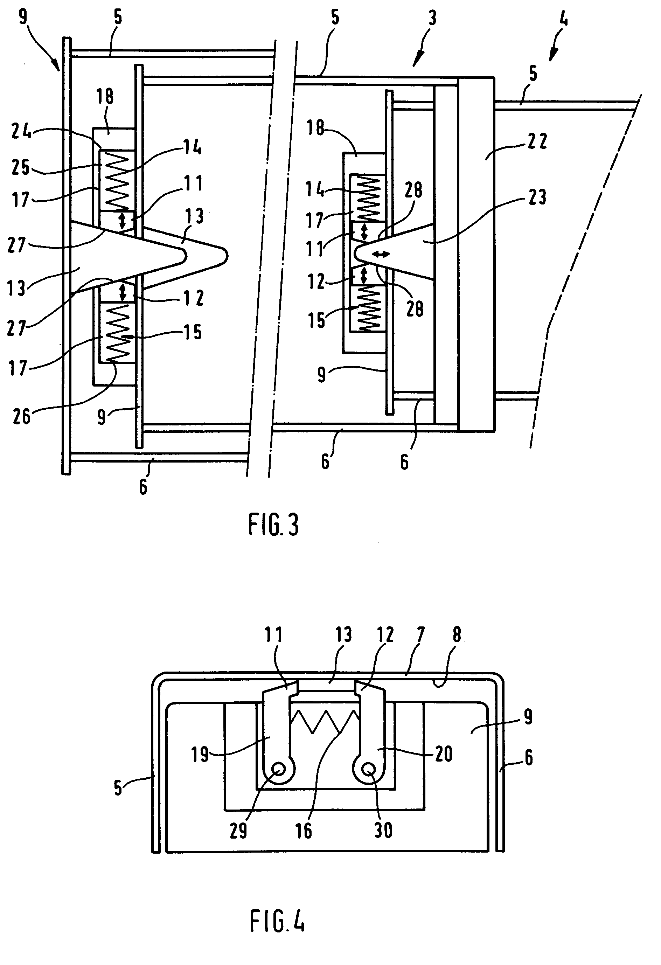

Die Bremsbacken 11, 12 sind in einem Gehäuse 18 angeordnet. Zur Führung der Bremsbacken 11, 12 weist das Gehäuse eine Führung 17 auf. Wie aus der Fig. 3 ersichtlich ist, sind in dem Gehäuse Federn 14, 15 angeordnet. Die Feder 14 ist eine Druckfeder, die zwischen der Bremsbacke 11 und einer Anschlagfläche 24 des Gehäuses 18 in einer Kammer 25 angeordnet ist. Die Kammer 25 ist eine Durchgangskammer, die auch zur Aufnahme der Bremsbacke 12 sowie der Feder 15 geeignet ist. Die Feder 15 ist zwischen der Bremsbacke 12 und einer Anschlagfläche 26 angeordnet. Die Bremsbacken 11, 12 sind aufeinander zu und voneinander weg beweglich.

Beim Zusammenschieben zweier benachbarter Abdeckkästen 2, 3; 3, 4 gelangt der Bremskörper 13 zwischen die Bremsbacken 11, 12. Der Bremskörper 13 ist im wesentlichen keilförmig ausgebildet. Die Basis des keilförmigen Bremskörpers 13 liegt an der Rückwand 9 an. Durch die Geometrie des keilförmigen Bremskörpers 13 werden die Bremsbacken 11, 12 während eines Zusammenschiebens benachbarter Abdeckkästen 2, 3; 3, 4 immer stärker auseinandergedrückt, wodurch die Federn 14, 15 eine zunehmende Kompression erfahren. Hierdurch bedingt üben die Bremsbacken 11, 12 eine zunehmende Bremskraft auf den Bremskörper 13 aus.

Der Abbremsvorgang zur Vermeidung von Schallemission kann auch erfolgen, wenn die Abdeckkästen auseinandergezogen werden. Für diesen Zweck ist der zweite Bremskörper 23 vorgesehen. Der Bremskörper 23 entspricht im wesentlichen der Ausgestaltung des Bremskörpers 13, wobei die Spitzen der Bremskörper 13, 23 aufeinander zuweisen. Eine Momentaufnahme des Bremsvorgangs während eines Auseinanderziehens der Abdeckkästen 3, 4 zeigen die Fig. 2, 3 auf ihrer rechten Seite. Der Abbremsvorgang unterscheidet sich nicht von dem Abbremsvorgang, wie er beim Zusammenschieben der Abdeckkästen erfolgt. Es ist festzustellen, daß durch die erfindungsgemäße Ausgestaltung der Abdeckung die Bremsbacken sowohl für den Abbremsvorgang während des Zusammenschiebens als auch während des Auseinanderziehens der Abdeckkästen genutzt werden. Wie aus der Fig. 3 ersichtlich ist, weisen die Bremsbacken 11, 12 jeweils eine Bremsfläche 27 auf, die zur Anlage an den Bremskörper 13 sowie jeweils eine Bremsfläche 28 auf, die zur Anlage an den Bremskörper 23 gelangen.

In dem in der Fig. 3 dargestellten Ausführungsbeispiel sind die Bremsbacken 11, 12 gegen die Federkraft einer Druckfeder verschieblich. Statt Druckfedem können auch hydraulisch oder pneumatisch wirkende Dämpfer verwendet werden. Die Auswahl geeigneter Bauteile hängt auch von dem zur Verfügung gestellten Einbauraum ab.

Fig. 4 zeigt eine weitere Ausführungsform einer Abdeckung mit einer Bremseinrichtung. An der Unterseite 8 der Oberwand 7 ist ein Bremskörper 13 angeordnet. Die Gestalt des Bremskörpers 13 entspricht im wesentlichen der Gestalt des in der Fig. 2 dargestellten Bremskörpers. Bei dem Bremskörper 13 kann es sich auch um einen Bremskörper 23 handeln. Jede Bremsbacke 11, 12 ist an einem verschwenkbar an der Rückwand 9 angeordneten Tragarm 19 bzw. 20 ausgebildet. Jede Bremsbacke 11, 12 ist an einem vorderen Endbereich des Tragarms 19 bzw. 20 ausgebildet. Jeder Tragarm 19, 20 ist um eine Schwenkachse 29, 30 verschwenkbar. Die Schwenkachse 29 bzw. 30 ist an dem der Bremsbacke 11 bzw. 12 gegenüberliegenden Endbereich des Tragarms 19 bzw. 20 ausgebildet. Die Tragarme 19, 20 sind durch eine gemeinsame Feder 16, bei der es sich um eine Zugfeder handelt, verbunden. Die Feder 16 ist mit ihrem einen Ende mit dem Tragarm 19 und mit ihrem anderen Ende mit dem Tragarm 20 verbunden. Die Verbindungsstellen liegen zwischen der Bremsbacke 11 und der Schwenkachse 29 bzw. zwischen der Bremsbacke 12 und der Schwenkachse 30. Jeder Tragarm 19, 20 ist laschenförmig ausgebildet, wodurch eine relativ flache und kompakte Ausgestaltung erreicht wird. Die Bremskraft der Bremsbacken 11, 12 auf den Bremskörper 13, 23 wird durch die Zugfeder erzeugt. Beim Auseinanderdrücken der Bremsbacken 11, 12 durch einen keilförmigen Bremskörper 13 bzw. 23 nimmt die Bremskraft zu.

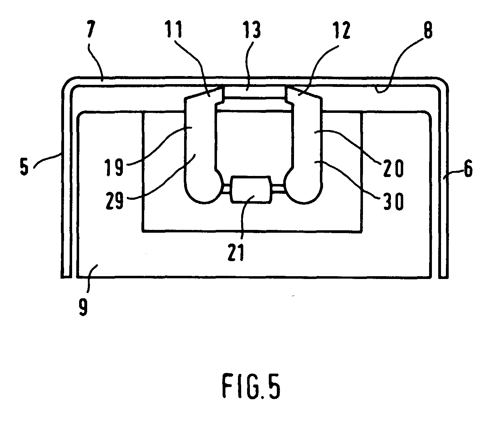

Eine alternative Ausgestaltung des Ausführungsbeispiels 4 zeigt die Fig. 5. Auch bei dieser Ausgestaltung sind die Bremsbacken 11, 12 jeweils an einem Tragarm 19, 20 ausgebildet. Jeder Tragarm 19, 20 ist um eine Schwenkachse 29 bzw. 30 verschwenkbar. An dem den Bremsbacken 11, 12 gegenüberliegenden Enden der Tragarme 19, 20 ist ein hydraulisch oder pneumatisch wirkender Dämpfer 21 angeordnet und mit dem jeweiligen Endbereich der Tragarme 19, 20 verbunden. Der Dämpfer 21 ist ein doppelseitig wirkender Dämpfer. In dem in der Fig. 5 dargestellten Ausführungsbeispiel liegen die Schwenkachsen 29, 30 zwischen den Bremsbacken 11, 12 und dem Dämpfer 21, wodurch die vom Dämpfer 21 erzeugte Kraft entsprechend dem Hebelgesetz durch die Bremsbacken 11, 12 auf den Bremskörper 13 übertragen werden kann.

### BEZUGSZEICHENLISTE

- 1: Abdeckung
- 2, 3, 4: Abdeckkasten
- 5, 6: Seitenwand
- 7: Oberwand
- 8: Unterseite
- 9: Rückwand
- 10: Bremseinrichtung
- 11: Bremsbacke
- 12: Bremsbacke
- 13: Bremskörper
- 14, 15, 16: Feder
- 17: Führung
- 18: Gehäuse
- 19, 20: Tragarm
- 21: Dämpfer
- 22: Abstreifer
- 23: Bremskörper
- 24: Anschlagfläche
- 25: Kammer
- 26: Anschlag
- 27: Bremsfläche
- 28: Bremsfläche
- 29, 30: Schwenkachse

## Patentansprüche

1. Abdeckung für ein Maschinenbett, insbesondere einer Werkzeugmaschine, umfassend teleskopartig ineinander schiebbare Abdeckkästen (2, 3, 4), wobei zwei benachbarte Abdeckkästen (2, 3; 3, 4) wenigstens eine gemeinsame Bremseinrichtung (10) aufweisen, die wenigstens einen an dem einen Abdeckkasten (2, 3) angeordneten Bremskörper (13, 23) und wenigstens eine an dem anderen Abdeckkasten (3, 4) angeordnete Bremsbacke (11, 12) hat, wobei jede Bremsbacke (11, 12) eine im wesentlichen quer zur Bewegungsrichtung des Bremskörpers (13, 23) gerichtete Bremskraft auf den Bremskörper (13, 23) ausübt, wodurch die Relativgeschwindigkeit zwischen den benachbarten Abdeckkästen (2, 3; 3, 4) verringert, vorzugsweise aufgehoben, wird.

2. Abdeckung nach Anspruch 1, dadurch gekennzeichnet, daß wenigstens eine der Bremsbacken (11, 12) im wesentlichen quer zur Bewegungsrichtung des Bremskörpers (13, 23) gegen eine Kraft verschieblich ist.

3. Abdeckung nach Anspruch 2, dadurch gekennzeichnet, daß die Bremsbacke (11, 12) gegen die Kraft wenigstens einer Feder (14, 15, 16) verschieblich ist.

4. Abdeckung nach Anspruch 3, dadurch gekennzeichnet, daß die Feder (14, 15) eine Druckfeder ist.

5. Abdeckung nach Anspruch 3, dadurch gekennzeichnet, daß die Feder (16) eine Zugfeder ist.

6. Abdeckung nach Anspruch 2, dadurch gekennzeichnet, daß die Bremsbacke (11, 12) gegen die Kraft wenigstens eines hydraulisch oder pneumatisch wirkenden Dämpfers (21) verschieblich ist.

7. Abdeckung nach einem der Ansprüche 1 bis 6, dadurch gekennzeichnet, daß jede Bremsbacke (11, 12) wenigstens teilweise aus einem stoßdämpfenden Material besteht.

8. Abdeckung nach einem der Ansprüche 2 bis 7, dadurch gekennzeichnet, daß für jede Bremsbacke (11, 12) eine Führung (17) vorhanden ist.

9. Abdeckung nach Anspruch 8, dadurch gekennzeichnet, daß die Führung (17) in einem Gehäuse (18) ausgebildet ist.

10. Abdeckung nach einem der Ansprüche 2 bis 8, wobei jeder Abdeckkasten (2, 3, 4) eine erste (5) und eine zweite (6) Seitenwand und eine mit den Seitenwänden (5, 6) verbundene Oberwand (7) sowie eine Rückwand (9) aufweist, dadurch gekennzeichnet, daß jede Bremsbacke (11, 12) an einem verschwenkbar an der Rückwand (9) angeordneten Tragarm (19, 20) ausgebildet ist und der Bremskörper (13, 23) an einer Unterseite (8) der Oberwand (7) des nächst größeren Abdeckkastens (2, 3) angeordnet ist.

11. Abdeckung nach Anspruch 10, dadurch gekennzeichnet, daß die Tragarme (19, 20) wenigstens eine gemeinsame Feder (16) aufweisen.

12. Abdeckung nach Anspruch 10, dadurch gekennzeichnet, daß die Tragarme (19, 20) wenigstens einen gemeinsamen hydraulisch oder pneumatisch wirkenden Dämpfer (21) aufweisen.

13. Abdeckung nach Anspruch 12, dadurch gekennzeichnet, daß der Dämpfer (21) ein doppelseitig wirkender Dämpfer ist.

14. Abdeckung nach einem der Ansprüche 1 bis 13, dadurch gekennzeichnet, daß der Bremskörper (13, 23) keilförmig ausgebildet ist.

15. Abdeckung nach einem der Ansprüche 10 oder 14, dadurch gekennzeichnet, daß zwei Bremskörper (13, 23) vorgesehen sind, wobei der eine Bremkörper (13) im Bereich der Rückwand (9) und der andere Bremskörper (23) in dem der Rückwand (9) gegenüberliegenden Bereich angeordnet sind.
